# EUROPEAN PATENT SPECIFICATION

(11) **EP 1 836 430 B1**
(45) Date of publication and mention of the grant of the patent: **18.08.2010**
(21) Application number: 05818767.5
(22) Date of filing: 16.12.2005
(51) Int. Cl.: F16L 37/62

(54) **A COUPLING UNIT FOR USE IN THE EVACUATION AND PRESSURE FILLING OF A CONTAINER**
VERBINDUNGSEINHEIT ZUR VERWENDUNG BEI DER EVAKUIERUNG UND DRUCKFÜLLUNG EINES BEHÄLTERS
UNITE DE COUPLAGE UTILISEE DANS L'EVACUATION ET LE REMPLISSAGE SOUS PRESSION D'UN RECIPIENT

(30) Priority: 03.01.2005 DK 200500003
(43) Date of publication of application: 26.09.2007
(73) Proprietor: Agramkow Fluid Systems A/S, 6400 Sønderborg (DK)
(72) Inventor: KLIETSCH, Morten c/o Agramkow Fluid Systems A/S, DK-6400 Sønderborg (DK)
(74) Representative: Larsen, Hans Ole
(86) International application number: PCT/DK2005/000799
(87) International publication number: WO 2006/072242

(56) References cited:
- WO-A1-95/02554
- WO-A1-2004/069734
- DE-A1- 3 639 528
- DE-A1-102008 010 503
- US-A- 4 805 417
- US-B1- 6 298 869

## Description

### The prior art

The invention relates to a coupling unit for use in the evacuation and pressure filling of a container for a medium by coupling to a filling stub (5) on the container of the medium, e.g. in a vehicle or at other locations with difficult access conditions, and which consists of a tubular body which has gripper means (8) at the end to grip the filling stub, and which may be locked firmly in the engagement position, and wherein a gasket (9) in the coupling unit seals axially between the end of the filling stub and a corresponding part of the coupling unit when the gripper means are in engagement, which gripper means and the means for applying a sealing pressure on the gasket are activated by a pneumatic actuator which is moved linearly, in that it activates the gripper means (8) and applies a pressure to the gasket (9), following which it opens a non-return valve (11) in the filling stub (5)

At many locations, access to the container in the circuit to be filled can only be had via a filling stub. To achieve correct filling, the circuit must be evacuated first before the liquid can be added.

When a filler head or the like is coupled to a filling stub, it is necessary, inter alia for environmental reasons, to be certain that the coupling unit and the filling stub forms a tight connection when coupled together, and that no gases or the like escape to the surroundings upon disengagement.

The types of seals which are normally used for said joints, are most frequently seals by means of O-rings or other seals which seal by radial impact.

This radial impact, which occurs when the O-ring is pressed inwards over the stub at coupling, contributes to making the seal fatigued, so that the seal becomes leaky relatively rapidly.

German Offenlegungsschrift No. 36 39 528 A1 describes a coupling unit of the above-mentioned type with gripper claws and with a seal which seals against the end of the containers by axial compression. The coupling is operated by a hand grip. In a structure of this type, the coupling unit does not affect the surroundings with forces when it is engaged, as the pressure on the gasket and on the gripper means mutually neutralize each other. Therefore, no impacts or displacements can spread to the pipe system with which the filling stub is connected.

US 4805417 A discloses another coupling unit of the above-mentioned type for evacuation and refilling a system with a refrigerant. The coupling unit has gripper claws and a seal which seals against the end of the containers by axial compression. In a first embodiment the gripper means are locked to the fitting of the container by a first pressurised air source. A second pressurised air source then activate evacuation of refrigerant from the system, enable refilling of the system with a refrigerant. When the pressurised air locking the coupling unit to the fitting is released, the coupling unit will automatically be rejected from the fitting.

A second embodiment also uses a first source of pressurised air to lock the grippers to the fitting of the container, and then a series of four different pressurised air sources activated consecutively in order to activate evacuation of refrigerant from the system, enable re-filling of the system with a refrigerant and subsequently close the fluid connection between the refrigerant system and coupling unit connected to the source of refrigerant.

### The object of the invention

Owing to considerations of space, e.g., it is desirable, however, to operate the coupling unit with a pneumatic actuator, and, accordingly, the object of the invention is to provide such a coupling unit, where both the locking of the gripper means and the compression of the gasket take place with a pneumatic actuator, and where it is moreover possible to open a non-return valve in the container stub with the same actuator.

This is achieved according to the invention by a coupling unit of this type, which is characterized in that the gripper means and the means for applying a sealing pressure on the gasket are activated simultaneously by a single pneumatic actuator connected to a source of pressurised air following which the non-return valve in the filling stub is opened by a further linear movement of the pneumatic actuator, as stated in claim 1.

When these three operations are performed in one cycle of the actuator, viz. in a first sub-movement where it compresses the spring of the gasket and simultaneously locks the gripper means, and by the further movement where it opens the non-return valve of the filling stub, it is ensured that the coupling unit is simple to use and requires very limited space, it being not necessary to have access to a hand grip at a not very accessible coupling location. The coupling unit is applied down over the filling stub and the source of compressed air is activated, as a result of which it is immediately locked, the gasket is activated and the non-return valve of the container stub is opened, following which the evacuation and the subsequent filling may begin.

As stated in claim 2, the gripper means for the filling stub may be hinged gripper claws which cooperate with an annular groove in the filling stub, and which are engaged by an axial displacement of an outer bushing with bosses caused by the actuator.

As stated in claim 3, the means for applying pressure to the gasket may comprise a spring unit which subjects the gasket to axial pressure, and whose spring is compressed by the pneumatic actuator.

The part of the actuator which opens the non-return valve is a rod extending at the axis of the filling pipe, said rod being in firm connection with the pneumatic piston and being adapted to continue the axial movement after the gripper means for the stub have been engaged and the gasket has been subjected to axial pressure, whereby the end of the rod presses the non-return valve to an open position, said spring unit being compressed additionally by the continued movement of the piston, as stated in claim 4.

When the actuator has performed the two first operations, its movement continues against the action of the spring, whereby the innermost positioned rod is caused to contact the non-return valve and opens it.

Further, environmental consideration should be given to the residual medium volume which occurs after a filling with an ordinary filling apparatus.

To address this, the valve and the adapter are equipped with one or more heating elements, as stated in claim 5, Since, during the filling process, the medium may change its state from liquid to gas, the coupling is provided with a heating element, said heating element preventing condensation in the coupling itself, it being ensured at the same time that the medium enters into gas phase at the terminating phase of the actual filling, whereby supercooling together with a strong expansion of the medium takes place. Owing to this strong expansion of the medium, an insignificant amount of the medium is left in the coupling itself.

Since also a pre-evacuation takes place prior to the next filling and connection of the coupling, this, together with the above-mentioned expansion, contributes to ensuring that an insignificant amount, if any at all, of the medium can escape to the surroundings.

The physical access conditions to the filling stub are very limited, and, therefore, it is not possible to use previously known manipulators, as the space does not allow access with both a tool and a hand to arrange and/or operate the tool, and therefore, physical size and ergonomics for the sake of the operator are very important parameters.

To accomplish this, the valve housing, the adapter and the coupling are optimized with respect to the outside diameter, inter alia in that the valves used for operating the filler head are not arranged radially as is usual, but are arranged axially in the coupling. Further, a reduction of the outside diameter of the coupling is provided in a direction from the operating part of the filler head and toward the end of the coupling which is coupled to the filling stub.

To ensure a brief service and repair time as well as reliability and serviceability, the valve housing, the adapter and the coupling are modular and may be coupled together with a minimum number of fasteners, e.g. screws. Evacuation of the circuit takes place in that the vacuum valve in the valve housing is activated (pneumatically), thereby establishing a connection from the circuit through the coupling, the adapter, the valve and the valve housing and hoses or connections to an evacuation unit. After accomplished evacuation, the vacuum valve is deactivated (pneumatic closing), and a new connection is established from the circuit when the filling valve is activated (pneumatically) through the coupling, the adapter, the valve housing and hoses or connections to a filling unit. When the circuit has been filled, the filling valve is deactivated (pneumatic closing), the coupling is deactivated pneumatically, and the gripper means thereby release the collar of the filling stub. After disengagement, the coupling is pre-evacuated until the next process.

### The drawing

An example of a filler head according to the invention will be described below with reference to the drawing, in which
- Fig. 1: shows a filler head consisting of valve housing, 90° adapter and coupling, where housing, valves, hose or connection, control, operator handle and adapter interface constitute an integrated unit,
- fig. 2: shows the coupling of the filler head shown in figure 1,
- fig. 3: shows the coupling when it is arranged on the filling stub, so that the gasket engages the face of the filling stub,
- fig. 4: shows the coupling in the situation where the pneumatic actuator is activated and is moved forwards, whereby the outer jacket is moved correspondingly forwards and pushes the gripper means into engagement with the collar of the filling stub,
- fig. 5: shows the coupling in the situation where the pneumatic actuator continues forwards toward the touch point of the non- return valve, at the same time as the internal valve opens and the volume between the internal valve and the non-return valve is evacuated, and
- fig. 6: shows the coupling in the situation where the gasket forms a seal for the filling stub, following which the filling process may be performed.

### Description of an exemplary embodiment

Embodiments and preferred exemplary embodiments of a filler head with a coupling according to the invention will be described below.

The filler head 1 comprises a valve housing 2, which is preferably composed of a housing, valves, a hose connection, a control panel, an operator handle and an adapter interface and thus constitutes an integrated subcomponent of the filler head 1.

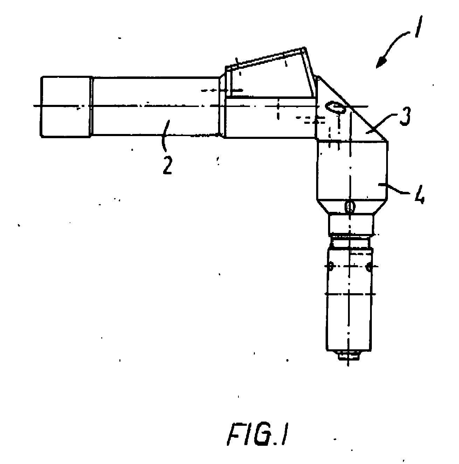

As shown in figure 1, the valve housing 2 is coupled to the coupling 4 by means of an adapter 3. In this case, the adapter 3 is an adapter which joins the valve housing 2 with the coupling 4 at an angle of 90°, but in other cases access conditions to a filling stub 5 to be operated may mean that the adapter 3 must be capable of joining and holding the valve housing 2 with the coupling 4 at a different angle.

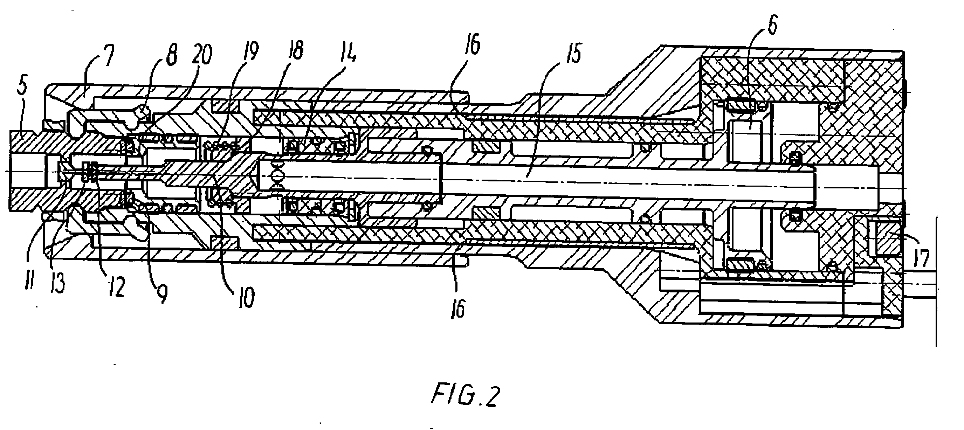

As will be seen in figure 2, the coupling itself comprises a pneumatic actuator 6, an outer jacket 7, gripper means 8, a gasket 9 for sealing against a face, a pin for opening the non-return valve 10 of the filling stub, the filling stub 5, the non-return valve 11 of the filling stub, a touch point non-return valve 12, said touch point being the point where the pin 10 just touches the non-return valve 11, an opening/closing point 13, an internal valve 14, an internal filling pipe 15, a heating element 16, an interface plug 17, a biasing unit 18, a spring 19 and a gasket holder 20.

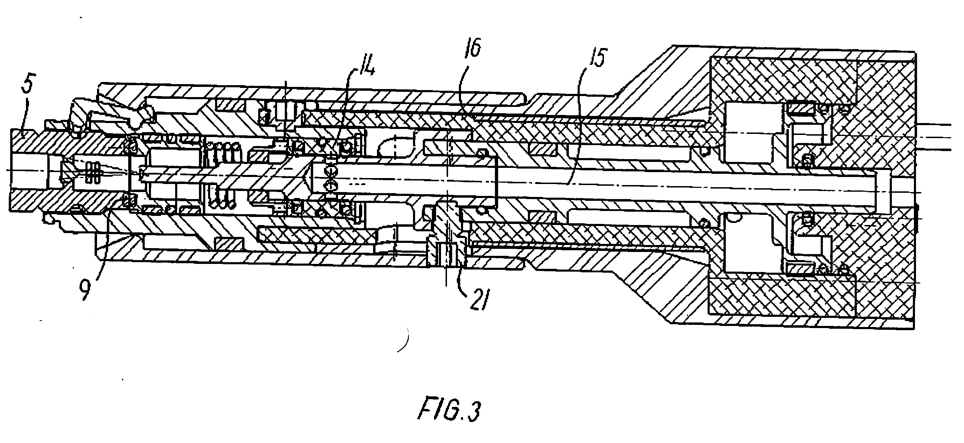

When the coupling is composed of the above-mentioned parts among others, the coupling may be arranged on the filling stub 5 until the gasket 9 engages the face of the filling stub. This situation is shown in figure 3. The filling pipe 15 of the coupling is pre-evacuated from the internal valve 14 and back. The pre-evacuation may be effective right back to the medium supply (the units 2, 3, 4 in figure 1).

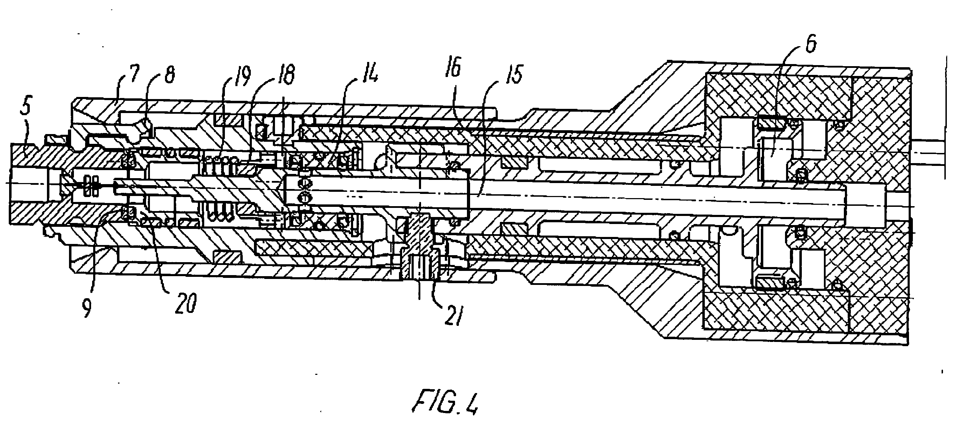

Then, the start button on the control panel is activated, whereby the pneumatic actuator 6 is activated and is moved forwards, as will appear from figure 4, so that the outer jacket 7 is moved correspondingly forwards and pushes the gripper means 8 into engagement with the collar of the filling stub 5. At the same time, the biasing unit 18 is activated by the filling pipe 15, whereby the forces of the spring 19 are transferred to the gasket holder 20, and the gasket 9 is now in vacuum sealing engagement with the filling stub 5. It is ensured in this manner that the gasket 9 may thus form a tight seal both under vacuum and under pressure.

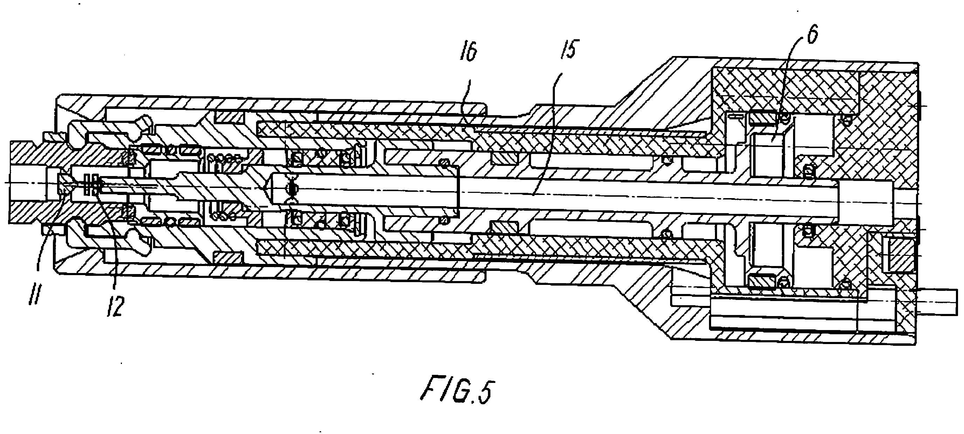

The pneumatic actuator 6 continues forwards toward the touch point 12 of the non-return valve, as shown in figure 5. At the same time, the internal valve 14 opens and the volume present between the internal valve 14 and the non-return valve 11 is evacuated.

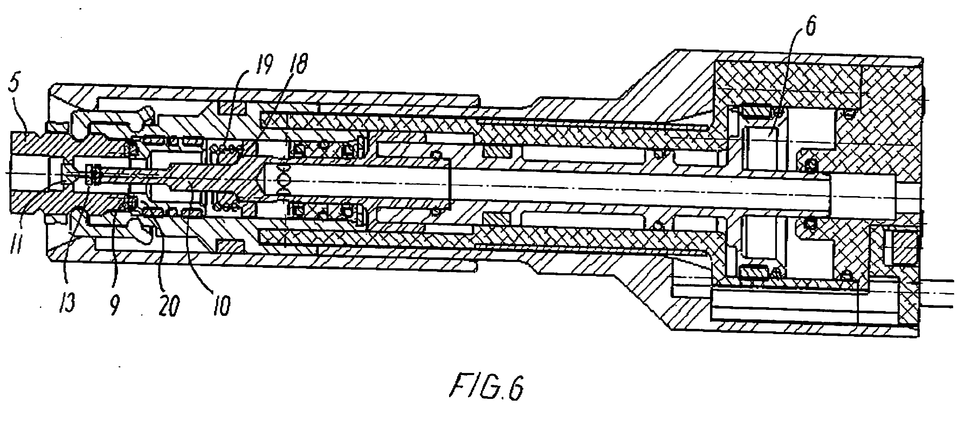

The pneumatic actuator 6 then continues to its end position, as shown in figure 6. Hereby, the spring 19 is compressed maximally by the biasing unit 18, whereby the force is transferred to the gasket 9 via the gasket holder 20. The seal for the filling stub 5 is thus both vacuum and pressure tight. In the meantime, the pin 10 has been advanced to the opening/closing point 13 of the non-return valve 11, and the filling process may be performed now. This also ensures that the non-return valve 11 of the filling stub 5 is affected by the actuator 6 to open via the internal filling parts, which filling parts may preferably be the filling pipe 15, the internal valve 14, the pin 10 for opening the non-return valve 11 of the filling stub 5, the biasing unit 18 and the gasket holder 20 with the gasket 9.

To ensure that the medium supply is blocked when the coupling part 4 is disengaged, a pin 21 or the like may be provided, which pin 21 mechanically connects the outer jacket with the inner coupling parts so that, if the jacket is pulled back for disengagement of the coupling, the inner coupling parts comprising the medium supply parts will likewise be closed and removed from the filling stub 5.

As the medium may change its state from gas to liquid during filling, the coupling is provided with a heating element which partly prevents condensation in the coupling, but also ensures that, when the filling has been completed, the medium enters into gas phase, thereby causing supercooling together with a strong expansion of the medium, which leaves an insignificant amount of medium in the coupling.

In a preferred embodiment, the individual modules are secured to each other by means of just two screws, but may also be secured to each other in other ways.

The adapter 3 for joining the valve housing 2 and the coupling 4 means that, if the filler head is to be used for filling in connection with a different type of vehicle or model, it is possible to adapt the angle of the filler head to the different type of vehicle or model merely by replacing the adapter by another adapter having another angle. Thus, it is also possible to make an adapter so that the valve housing and the coupling extend in extension of each other, optionally as a crank, In another embodiment, the valve housing and the coupling may optionally be joined without an adapter.

This gives many degrees of freedom in the construction of the filler head.

## Claims

1. A coupling unit for use in the evacuation and pressure filling of a container for a medium by coupling to a filling stub (5) on the container of the medium, e.g. in a vehicle or at other locations with difficult access conditions, and which consists of a tubular body which has gripper means (8) at the end to grip the filling stub, and which may be locked firmly in the engagement position, and wherein a gasket (9) in the coupling unit seals axially between the end of the filling stub and a corresponding part of the coupling unit when the gripper means are in engagement, which gripper means and the means for applying a sealing pressure on the gasket are activated by a pneumatic actuator which is moved linearly, which activates the gripper means (8) and applies a pressure to the gasket (9), following which it opens a non-return valve (11) in the filling stub (5), **characterized in that** the gripper means (8) and the means for applying a sealing pressure (18, 19, 20) on the gasket (9) are activated simultaneously by a single pneumatic actuator (6) connected to a source of pressurised air following which the non-return valve (11) in the filling stub (5) is opened by a further linear movement of the pneumatic actuator (6).

2. A coupling unit according to claim 1 **characterized in that** the gripper means for the filling stub are hinged gripper claws (8) which cooperate with an annular groove in the filling stub (5), and which are engaged by an axial displacement of an outer bushing (7) with bosses caused by the actuator (6) which bosses press the gripper claws (8).

3. A coupling unit according to claim 1 or 2, **characterized in that** the means for applying pressure to the gasket (9) comprise a spring unit (19) which subjects the gasket to axial pressure, and whose spring is compressed by the pneumatic actuator (6).

4. A coupling unit according to any of claims 1-3, **characterized in that** the part of the actuator (6) which opens the non-return valve (11), is a rod (10) extending at the axis of the filling pipe (15), said rod being in firm connection with the pneumatic piston and being adapted to continue the axial movement after the gripper means (8) for the stub have been engaged and the gasket has been subjected to axial pressure, whereby the end of the rod (10) presses the non-return valve (11) to an open position, said spring unit (19) being compressed additionally by the continued movement of the piston.

5. A coupling unit according to any of claims 1-4, **characterized in that** the coupling unit (4) is connected by means of an adapter (3) with a valve housing (2) comprising a operating unit and thus constitutes an assembled unit.

## Patentansprüche

1. Verbindungseinheit für die Verwendung bei der Evakuierung und Druckbefüllung eines Behälters für ein Medium durch Koppeln an einen Füllstutzen (5) an dem Behälter des Mediums beispielsweise in einem Fahrzeug oder an anderen Orten mit schwierigen Zugangsbedingungen, wobei die Verbindungseinheit aus einem röhrenförmigen Körper besteht, der Greifeinrichtungen (8) an dem Ende hat, die den Füllstutzen greifen und die in der Eingriffsstellung fest verriegelt werden können, wobei eine Dichtung (9) in der Verbindungseinheit eine axiale Dichtung zwischen dem Ende des Füllstutzens und einem entsprechenden Teil der Verbindungseinheit herstellt, wenn sich die Greifeinrichtungen in Eingriff befinden, wobei die Greifeinrichtungen und die Einrichtungen zum Ausüben eines Dichtungsdrucks auf die Dichtung durch ein pneumatisches Betätigungselement aktiviert werden, das linear bewegt wird, die Greifeinrichtungen (8) aktiviert und einen Druck auf die Dichtung (9) ausübt, worauf es ein Absperrventil (11) in dem Füllstutzen (5) öffnet, **dadurch gekennzeichnet, dass** die Greifeinrichtungen (8) und die Einrichtungen (18, 19, 20) zum Ausüben eines Dichtungsdrucks auf die Dichtung (9) durch ein einziges pneumatisches Betätigungselement (6) gleichzeitig aktiviert werden, das mit einer Druckluftquelle verbunden ist, worauf das Absperrventil (11) in dem Füllstutzen (5) durch eine weitere lineare Bewegung des pneumatischen Betätigungselementes (6) geöffnet wird.

2. Verbindungseinheit nach Anspruch 1, **dadurch gekennzeichnet, dass** die Greifeinrichtungen für den Füllstutzen gelenkig angebrachte Greifklauen (8) sind, die mit einer ringförmigen Rille in dem Füllstutzen (5) zusammenwirken und die durch eine axiale Verschiebung einer äußeren Buchse (7) mit Vorsprüngen, bewirkt durch das Betätigungselement (6), in Eingriff gelangen, wobei die Vorsprünge gegen die Greifklauen (8) drücken.

3. Verbindungseinheit nach Anspruch 1 oder 2, **dadurch gekennzeichnet, dass** die Einrichtungen zum Ausüben eines Drucks auf die Dichtung (9) eine Federeinheit (19) beinhalten, die die Dichtung einem axialen Druck aussetzt und deren Feder durch das pneumatische Betätigungselement (6) zusammengedrückt wird.

4. Verbindungseinheit nach einem der Ansprüche 1 bis 3, **dadurch gekennzeichnet, dass** der Teil des Betätigungselementes (6), der das Absperrventil (11) öffnet, ein Stab (10) ist, der sich in der Achse des Befollungsrohres (15) erstreckt, wobei dieser Stab in fester Verbindung mit dem pneumatischen Kolben steht und dazu eingerichtet ist, die axiale Bewegung fortzusetzen, nachdem die Greifeinrichtungen (8) für den Stutzen in Eingriff gebracht worden sind und die Dichtung einem axialen Druck ausgesetzt wurde, wodurch das Ende des Stabes (10) das Absperrventil (11) in eine geöffnete Stellung drückt und die Federeinheit (19) durch die fortgesetzte Bewegung des Kolbens zusätzlich zusammengedrückt wird.

5. Verbindungseinheit nach einem der Ansprüche 1 bis 4, **dadurch gekennzeichnet, dass** die Verbindungseinheit (4) mit Hilfe eines Adapters (3) mit einem Ventilgehäuse (2) verbunden ist, das eine Betätigungseinheit enthält und somit eine zusammengesetzte Einheit bildet.

## Revendications

1. Unité d'accouplement destinée à être utilisée dans l'évacuation et le remplissage sous pression d'un contenant pour un produit par accouplement avec un embout de remplissage (5) sur le contenant du produit, par exemple dans un véhicule ou dans d'autres emplacements avec des conditions d'accès difficiles, et qui se constitue d'un corps tubulaire qui comporte des moyens de préhension (8) à l'extrémité pour saisir l'embout de remplissage, et qui peut être verrouillé fermement dans la position de prise, et dans laquelle un joint (9) dans l'unité d'accouplement réalise une étanchéité de façon axiale entre l'extrémité de l'embout de remplissage et une partie correspondante de l'unité d'accouplement lorsque les moyens de préhension sont en prise, lesquels moyens de préhension et les moyens pour appliquer une pression d'étanchéité sur le joint sont activés par un actionneur pneumatique qui est déplacé de façon linéaire, qui active les moyens de préhension (8) et applique une pression sur le joint (9), après quoi il ouvre une soupape de non-retour (11) dans l'embout de remplissage (5), **caractérisée en ce que** les moyens de préhension (8) et les moyens pour appliquer une pression d'étanchéité (18, 19, 20) sur le joint (9) sont activés simultanément par un seul actionneur pneumatique (6) raccordé à une source d'air sous pression, après quoi la soupape de non-retour (11) dans l'embout de remplissage (5) est ouverte par un mouvement linéaire supplémentaire de l'actionneur pneumatique (6).

2. Unité d'accouplement selon la revendication 1, **caractérisée en ce que** les moyens de préhension pour l'embout de remplissage sont des mâchoires de préhension articulées (8) qui coopèrent avec une rainure annulaire dans l'embout de remplissage (5), et qui sont mises en prise par un déplacement axial d'une douille extérieure (7) avec des bossages entraînés par l'actionneur (6), lesquels bossages compriment les mâchoires de préhension (8).

3. Unité d'accouplement selon la revendication 1 ou 2, **caractérisée en ce que** les moyens pour appliquer une pression sur le joint (9) comprennent une unité de ressort (19) qui soumet le joint à une pression axiale, et dont le ressort est comprimé par l'actionneur pneumatique (6).

4. Unité d'accouplement selon une quelconque des revendications 1 à 3, **caractérisée en ce que** la partie de l'actionneur (6) qui ouvre la soupape de non-retour (11) est une tige (10) s'étendant à l'axe du tuyau de remplissage (15), ladite tige étant en liaison ferme avec le piston pneumatique et étant adaptée pour continuer le mouvement axial après que les moyens de préhension (8) pour l'embout ont été mis en prise et le joint a été soumise une pression axiale, moyennant quoi l'extrémité de la tige (10) comprime la soupape de non-retour (11) jusqu'à une position ouverte, ladite unité de ressort (19) étant comprimée en outre par le mouvement continué du piston.

5. Unité d'accouplement selon une quelconque des revendications 1 à 4, **caractérisée en ce que** l'unité d'accouplement (4) est reliée au moyen d'un adaptateur (3) avec un boîtier de soupape (2) comprenant une unité de fonctionnement et ainsi constitue une unité assemblée.
